# EUROPÄISCHE PATENTSCHRIFT

(11) **EP 3 000 037 B1**
(45) Veröffentlichungstag und Bekanntmachung des Hinweises auf die Patenterteilung: **15.08.2018**
(21) Anmeldenummer: 14734375.0
(22) Anmeldetag: 20.05.2014
(51) Int. Cl.: G06F 9/48, G01S 13/86, G06K 9/00, H04N 19/436, G06F 17/18

(54) **VERFAHREN ZUR INTEGRATION VON BERECHNUNGEN MIT VARIABLER LAUFZEIT IN EINE ZEITGESTEUERTE ARCHITEKTUR**
METHOD FOR INTEGRATION OF CALCULATIONS HAVING A VARIABLE RUNNING TIME INTO A TIME-CONTROLLED ARCHITECTURE
PROCÉDÉ D'INTÉGRATION DE CALCULS À DURÉE D'EXÉCUTION VARIABLE DANS UNE ARCHITECTURE BASÉE SUR LE TEMPS

(30) Priorität: 21.05.2013 AT 503412013
(43) Veröffentlichungstag der Anmeldung: 30.03.2016
(73) Patentinhaber: FTS Computertechnik GmbH, 1040 Wien (AT)
(72) Erfinder: POLEDNA, Stefan, A-3400 Klosterneuburg (AT); GLÜCK, Martin, A-2244 Spannberg (AT)
(74) Vertreter: Patentanwaltskanzlei Matschnig & Forsthuber OG
(86) Internationale Anmeldenummer: PCT/AT2014/050120
(87) Internationale Veröffentlichungsnummer: WO 2014/186814

(56) Entgegenhaltungen:
- A. KLEIN ET AL: "Representing Data Quality in Sensor Data Streaming Environments", JOURNAL OF DATA AND INFORMATION QUALITY, Bd. 1, Nr. 2, 1. September 2009 (2009-09-01), Seiten 1-28, XP055134550, ISSN: 1936-1955, DOI: 10.1145/1577840.1577845
- KOPETZ H ET AL: "Periodic Finite-State Machines", OBJECT AND COMPONENT-ORIENTED REAL-TIME DISTRIBUTED COMPUTING, 2007. I SORC '07. 10TH IEEE INTERNATIONAL SYMPOSIUM ON, IEEE, PI, 1. Mai 2007 (2007-05-01), Seiten 10-20, XP031090591, DOI: 10.1109/ISORC.2007.47 ISBN: 978-0-7695-2765-9
- WEN-ZHAN SONG ET AL: "Design and Deployment of Sensor Network for Real-Time High-Fidelity Volcano Monitoring", IEEE TRANSACTIONS ON PARALLEL AND DISTRIBUTED SYSTEMS, IEEE SERVICE CENTER, LOS ALAMITOS, CA, US, Bd. 21, Nr. 11, 1. November 2010 (2010-11-01), Seiten 1658-1674, XP011303211, ISSN: 1045-9219
- RABEL M ET AL: "Communication architecture for sensorfusion systems", INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 363-368, XP010727497, DOI: 10.1109/IVS.2004.1336410 ISBN: 978-0-7803-8310-4
- Wilfried Elmenreich: "Sensor Fusion in Time-Triggered Systems", , 1. Oktober 2002 (2002-10-01), XP055134559, Gefunden im Internet: URL:http://www.cs.umu.se/research/ifor/dl/ Sensors/elmenreich_Dissertation_sensorFusi onInTimeTriggeredSystems.pdf [gefunden am 2014-08-13]

## Beschreibung

Die Erfindung betrifft ein Verfahren zur Integration von Berechnungen mit variabler Laufzeit in eine verteilte zeitgesteuerte Echtzeitcomputerarchitektur, welche Echtzeitcomputerarchitektur aus einer Anzahl von Rechnerknoten besteht, wobei den Rechnerknoten eine globale Zeit mit bekannter Präzision zur Verfügung steht, wobei zumindest ein Teil der Rechnerknoten mit Sensorsystemen, insbesondere unterschiedlichen Sensorsystemen zur Beobachtung der Umgebung ausgestattet ist, und wobei die Rechnerknoten über ein Kommunikationssystem Nachrichten austauschen.

In vielen technischen Verfahren, die von einem verteilten Computersystem ausgeführt werden, sind die Ergebnisse diverser Sensorsysteme, z.B. bildgebender Sensoren, etwa optischer Kameras, Lasersensoren oder Radarsensoren, durch *Sensor Fusion* zu integrieren, um in einem Rechner eine die Umgebung beschreibende dreidimensionale Datenstruktur aufbauen zu können. Ein Beispiel für ein solches Verfahren ist die Beobachtung der Umgebung eines Fahrzeugs, um ein Hindernis erkennen und einen Unfall vermeiden zu können.

Ein Verfahren, bei dem in einer verteilten zeitgesteuerten Echtzeitarchitektur, in der Rechnerknoten eine globale Zeit mit bekannter Präzision zur Verfügung steht, die Rechnerknoten der Echtzeitarchitektur am Beginn jedes zyklischen Frames rohe Eingabedaten mit einem Sensorsystem erfassen, ist aus A. Klein et al.: "Representing Data Quality in Sensor Data Streaming Environments", 1. September 2009, XP055134550 bekannt. Dabei erfolgt eine Vorverarbeitung der rohen Eingabedaten mit Algorithmen, und in den Rechnerknoten, welche eine Fusion von Vorverarbeitungsergebnissen der Sensorsysteme durchführen, werden Alterungsindices der Vorverarbeitungsergebnisse berücksichtigt.

Bei der Verarbeitung der Daten eines bildgebenden Sensors wird zwischen zwei Verarbeitungsphasen unterschieden, der *Vorverarbeitung* oder Perzeption und der *Wahrnehmung* oder Kognition. Im Rahmen der *Vorverarbeitung* werden die von den Sensoren gelieferten *rohen Eingabedaten,* die *Bitmaps,* analysiert, um die Position relevanter Strukturen, z.B. Linien, Winkel zwischen Linien, Schatten etc. zu ermitteln. Die Vorverarbeitung erfolgt in einem dem Sensor zugeordneten Vorverarbeitungsprozess. In der folgenden *Wahrnehmungsphase* werden die Ergebnisse der Vorverarbeitung der diversen Sensoren fusioniert, um Objekte erkennen und lokalisieren zu können.

In einem zeitgesteuerten Echtzeitsystem haben alle Rechnerknoten und Sensoren Zugriff auf eine globale Zeit bekannter Präzision. Der Ablauf der Verarbeitung erfolgt in diskreten zyklischen Intervallen konstanter Dauer, den *Frames,* deren Beginn über die globale Zeit synchronisiert wird. Zu Beginn eines Frames werden von allen Sensoren gleichzeitig die Daten erfasst. Die Dauer eines Frames wird so gewählt, dass im *Normalfall* die Vorverarbeitung der Sensordaten vor Ende des Frames, zu dessen Beginn die Daten erfasst wurden, abgeschlossen ist. Mit Beginn des folgenden Frames, wenn die Vorverarbeitungsergebnisse aller Sensoren vorliegen, beginnt die *Wahrnehmungsphase,* in der die Fusion der Vorverarbeitungsergebnisse vorgenommen wird, um die Struktur und Position relevanter Objekte zu erkennen. Wenn die Umgebung zyklisch beobachtet wird, können aus einer Folge von Beobachtungen (Frames) die Geschwindigkeitsvektoren *v* von sich bewegenden Objekten in der Umgebung ermittelt werden.

Die Laufzeit eines in einem Rechner durchgeführten Algorithmus, der die Vorverarbeitung der *rohen Eingabedaten* vornimmt, hängt normalerweise von den vom Sensor erfassten Daten ab. Wenn nun mehrere unterschiedliche bildgebende Sensoren die Umwelt zum gleichen Zeitpunkt beobachten, können die diese Beobachtung betreffenden Vorverarbeitungsergebnisse zu unterschiedlichen Zeitpunkten fertig werden.

Es ist eine Aufgabe der vorliegenden Erfindung, in einem verteilten zeitgesteuerten Echtzeitsystem die Ergebnisse diverser Sensoren, deren Vorverarbeitung unterschiedlich lange dauert, im Rahmen der Sensor Fusion integrieren zu können.

Diese Aufgabe wird mit einem eingangs erwähnten Verfahren dadurch gelöst, dass erfindungsgemäß die Rechnerknoten am Beginn jedes zyklischen Frames *Fᵢ* mit der Dauer *d rohe Eingabedaten* mit einem Sensorsystem erfassen, wobei die Zeitpunkte des Anfangs des Frames *Fᵢ* vom Fortschreiten der globalen Zeit abgeleitet werden, und wobei die Vorverarbeitung der rohen Eingabedaten mit Algorithmen durchgeführt wird, deren Laufzeiten von den Eingabedaten abhängen, und wobei bei einem Vorverarbeitungsergebnis, das innerhalb des Frames *Fᵢ* bereit gestellt wird, zu dessen Beginn die Eingabedaten erfasst wurden, der Wert des Alterungsindex *AI=0* zugeordnet wird, und wobei einem Vorverarbeitungsergebnis, das innerhalb des der Erfassung folgenden Frames bereit gestellt wird, der Wert des Alterungsindex *AI*=*1* zugeordnet wird, und wobei einem Vorverarbeitungsergebnis, das im *n*-*ten* Frame nach der Datenerfassung bereitgestellt wird, der Wert *AI*=*n* zugeordnet wird, und wobei in den Rechnerknoten, die die Fusion der Vorverarbeitungsergebnisse der Sensorsysteme durchführen, die Alterungsindizes der Vorverarbeitungsergebnisse berücksichtigt werden.

Vorteilhafte Ausgestaltungen des erfindungsgemäßen Verfahren, die alleine oder in beliebiger Kombination realisiert sein können, sind im Folgenden beschrieben:
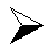 bei der Fusion der Vorverarbeitungsergebnisse wird die Gewichtung eines Vorverarbeitungsergebnisses derart bestimmt, dass ein Vorverarbeitungsergebnis mit *AI=0* die höchste Gewichtung erhält und die Gewichtung von Vorverarbeitungsergebnissen mit *AI>0* umso geringer ist, je größer der Wert *AI* ist;
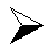 bei der Fusion eines Vorverarbeitungsergebnisses mit AI>0 wird die Position eines in diesem Vorverarbeitungsergebnisses enthaltenen dynamischen Objekts, das sich mit einem Geschwindigkeitsvektor *v* bewegt, um den Wert *v.AI.d* korrigiert, wobei *d* die Dauer eines Frames angibt;
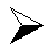 die Fusion der Vorverarbeitungsergebnisse findet erst nach dem Ende des Frames statt, während dessen *alle* Vorverarbeitungsergebnisse der Daten, die zum gleichen Zeitpunkt erfasst wurden, vorliegen;
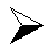 ein Rechnerknoten, der am Ende des *l-ten* Frames nach der Datenerfassung die Vorverarbeitung noch nicht abgeschlossen hat, führt einen *Reset* des Rechnerknotens durch;
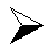 ein Vorverarbeitungsprozess, der am Ende des *l-ten* Frames nach der Datenerfassung die Vorverarbeitung noch nicht abgeschlossen hat, wird neu gestartet;
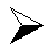 ein Rechnerknoten, der ein *Reset* durchgeführt hat, sendet unmittelbar nach dem Wiederanlauf eine Diagnosenachricht an einen Diagnoserechner;
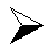 ein *Monitorprozess* in einem Rechnerknoten (**141**) sendet eine *Framekontrollnachricht* zur Erhöhung der Framedauer an Rechnerknoten (**121, 122, 123**), falls ein *a priori* festgelegter Prozentsatz *P* der Verarbeitungsergebnisse einen Alterungsindex *AI≥1* aufweist;
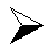 zur Übertragung der Nachrichten zwischen den Knotenrechnern wird das TTEthernet Protokoll eingesetzt.

Es kann also vorkommen, dass die Vorverarbeitung in einem Sensor länger dauert als die Dauer eines Frames. Wenn dieser Fall eintritt, so gilt es erfindungsgemäß folgende Fälle zu unterscheiden:
a) *Normalfall:* alle Vorverarbeitungsergebnisse liegen vor Ende des Frames vor, an dessen Beginn die Daten erfasst wurden.
b) *Schnelle Reaktion:* Ein oder mehrere der Sensoren sind am Ende des Frames, zu dessen Beginn die Daten erfasst wurden, noch nicht fertig. Die Sensor Fusion wird am Ende des aktuellen Frames rechtzeitig mit *älteren Vorverarbeitungsdaten* der *langsamen* Sensoren, d.s. Daten einer früheren Beobachtung, durchgeführt. Beim Auftreten von Inkonsistenzen (z.B. Beobachtung bewegter Objekte oder Bewegung der Sensoren) wird in der Sensor Fusion die Gewichtung der *älteren Vorverarbeitungsdaten* herabgesetzt. Die Reduktion der Gewichtung ist umso größer, je weiter die Beobachtungen zurück liegen.
c) *Schnelle Reaktion mit der Korrektur beweglicher Objekte:* Wenn eine schnelle Reaktion erforderlich ist und der ungefähre Geschwindigkeitsvektor v eines bewegten Objekts aus vergangenen Beobachtungen bereits bekannt ist, so kann die gegenwärtige Position des in der Vergangenheit beobachteten Objekts durch eine Korrektur der vergangenen Position, die sich aus der Geschwindigkeit des Objekt und dem Alter der ursprünglichen Beobachtung ergibt, korrigiert werden.
d) *Konsistente Reaktion:* Wenn die zeitliche Konsistenz der Beobachtungen wichtiger ist als die Reaktionsgeschwindigkeit des Computersystems, dann wird mit der Sensor-fusion auf den Beginn des ersten Frames gewartet, zu dem alle Vorverarbeitungsergebnisse zur Verfügung stehen.

Die Entscheidung, welche der beschriebenen Strategien im Einzelfall zu verfolgen ist, hängt von der konkreten Aufgabenstellung ab, die vorgibt, wie der inhärente Konflikt Geschwindigkeit versus Konsistenz zu lösen ist. In der recherchierten Patenliteratur [1 - 3] wurde kein Verfahren gefunden, das die hier beschriebene Problemstellung behandelt.

Die vorliegende Erfindung legt ein Verfahren offen, wie in einem verteilten zyklisch arbeitenden Computersystem die Vorverarbeitungsergebnisse diverser bildgebender Sensorsysteme im Rahmen der Sensorfusion integriert werden können. Da die Dauer der Berechnung eines Vorverarbeitungsergebnisses von den erfassten Sensordaten abhängt, kann der Fall eintreten, dass die Vorverarbeitungsergebnisse der diversen Sensoren zu unterschiedlichen Zeitpunkten fertig gestellt werden, obwohl die Erfassung der Daten synchron erfolgt ist. Es wird ein innovatives Verfahren vorgestellt, wie die zeitliche Inkonsistenz der Vorverarbeitungsergebnisse der diversen Sensoren im Rahmen der Sensorfusion zu behandeln ist. Aus der Sicht der Anwendung ist zu entscheiden, ob eine *schnelle Reaktion* des Systems oder die *zeitliche Konsistenz* der Daten im gegebenen Anwendungsfall von größerer Bedeutung ist.

Im Folgenden ist die Erfindung beispielhaft an Hand der Zeichnung näher erörtert. In dieser zeigt
Fig. 1 die Struktur eines verteilten Computersystems, und
Fig. 2 den zeitlichen Ablauf der Datenerfassung und Sensorfusion.

Das folgende konkrete Beispiel behandelt eine der vielen möglichen Realisierungen des neuen Verfahrens.

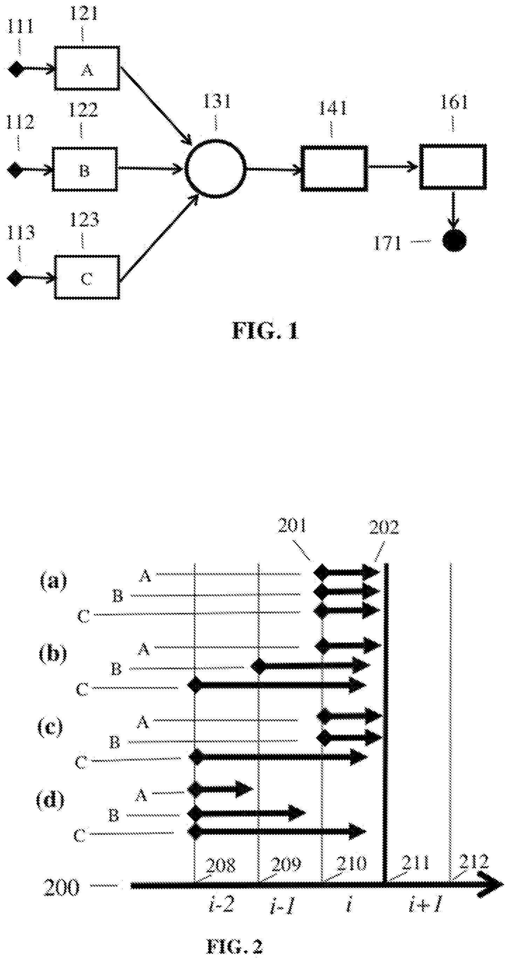

Fig. 1 zeigt ein Strukturdiagramm eines verteilten zyklischen Echtzeitsystems. Die drei Sensoren **111** (z.B. eine Kamera), **112** (z.B. ein Radar Sensor), und **113** (z.B. ein Laser Sensor) werden von einem Prozess A auf Rechnerknoten **121,** von einem Prozess B auf Rechnerknoten **122,** und von einem Prozess C auf Rechnerknoten **123** periodisch ausgelesen. Im Normalfall finden die Zeitpunkte des Auslesens zu Beginn eines *Frames Fᵢ* statt und werden über die globale Zeit, auf die alle Rechnerknoten zugreifen können, synchronisiert, so dass die Datenerfassung durch die drei Sensoren (Sensorsysteme) innerhalb der Präzision der *sparse* globalen Zeit quasi gleichzeitig erfolgt ([5], p.64). Die Dauer *d* eines Frames wird zu Beginn *a priori* vorgegeben und kann über eine *Frame-Kontrollnachricht,* die von einem *Monitorprozess* im Rechnerknoten **141** generiert wird, verändert werden. In den Rechnerknoten **121, 122,** und **123** werden die Sensordaten vorverarbeitet. Im Normalfall sind die Vorverarbeitungsergebnisse der Rechnerknoten **121, 122,** und **123** vor dem Ende des laufenden Frames in drei zeitgesteuerten *Zustandsnachrichten* ([4], p.91) in den Ausgangspuffern der Rechnerknoten **121, 122,** und **123** verfügbar. Zu Beginn des folgenden Frames werden über einen zeitgesteuerten Switch **131** die drei Zustandsnachrichten mit den Vorverarbeitungsergebnissen an die Sensor-Fusion-Komponente **141** gesendet. Die Sensor-Fusion Komponente **141** führt die Sensor Fusion durch, errechnet die Sollwerte für Aktuatoren und übergibt diese Sollwerte in einer zeitgesteuerten Nachricht an einen Rechnerknoten **161,** der Aktuatoren **171** ansteuert.

Der zeitgesteuerte Switch **131** kann zur Übertragung der Zustandsnachrichten zwischen den Rechnerknoten **121, 122,** und **123** und dem Rechnernoten **141** das standardisierte TTEthernet Protokoll [5] einsetzen.

Es kann vorkommen, dass eine oder mehrere der in den Rechnerknoten **121, 122,** und **123** ablaufenden Vorverarbeitungsberechnungen innerhalb des laufenden Frames nicht abgeschlossen werden. So ein Sonderfall beruht auf der Tatsache, dass die Laufzeiten der Algorithmen zur Vorverarbeitung der rohen Eingabedaten von der Struktur der erfassten Eingabedaten abhängen und in Ausnahmefällen die maximale Laufzeit einer Berechnung wesentlich länger sein kann als die durchschnittliche Laufzeit, die zur Festlegung der Framedauer herangezogen wird.

Fig. 2 zeigt den zeitlichen Ablauf der möglichen Fälle der Berechnungsprozesse der Vorverarbeitung. Das Fortschreiten der Echtzeit wird in Fig. 2 durch die Abszisse **200** dargestellt. Frame *i-2* beginnt zum Zeitpunkt **208** und endet mit Beginn des Frames *i-1* zum Zeitpunkt **209.** Zum Zeitpunkt **210** endet Frame *i-1* und beginnt Frame *i.* Zum Zeitpunkt **211,** dem Zeitpunkt des Beginns der Sensor Fusion, endet Frame *i* und beginnt Frame *i*+*1.* Im Frame *i*+*1* findet die Sensorfusion statt, die bis zum Zeitpunkt **212** dauert. Die Pfeile in Fig. 2 stellen die Laufzeit der Vorverarbeitungsprozesse dar. Der Mittelpunkt des Karos **201** gibt an, wann die Daten erfasst werden und ein Verarbeitungsprozess beginnt. Das Ende des Pfeils **202** gibt an, wann ein Verarbeitungsprozess fertig ist. In Fig. 2 sind drei Verarbeitungsprozesse dargestellt. Prozess *A* wird auf dem Rechnerknoten **121** ausgeführt, Prozess B auf dem Rechnerknoten **122** und Prozess C auf dem Rechnerknoten **123.**

Jedem Vorverarbeitungsergebnis wird von einem Rechnerknoten, vorzugsweise der Middleware eines Rechnerknotens ein *Alterungsindex AI* zugewiesen, der angibt, wie alt die Eingabedaten sind, auf dessen Grundlage das Vorverarbeitungsergebnis berechnet wurde. Wenn das Ergebnis vor Ende des Frames bereitgestellt gestellt wird, an dessen Beginn die Eingabedaten erfasst wurden, so wird dem Vorverarbeitungsergebnis der Wert *AI=0* zugewiesen, wenn das Ergebnis um einen Frame verzögert ist, wird *AI*=*1* gesetzt und wenn das Ergebnis um zwei Frames verzögert ist, wird *AI*=2 gesetzt. Wenn ein Verarbeitungsergebnis um *n* Frames verzögert ist, so wird der entsprechende *AI* Wert auf *AI*=*n* gesetzt.

Im Normalfall, das ist Fall (a) von Fig. 2, werden die rohen Eingabedaten zu Beginn des Frames *i*, d.i. zum Zeitpunkt **210** erfasst und zum Zeitpunkt **211** an die Sensor-Fusion-Komponente **141** weitergeleitet. In diesem Fall wird allen Vorverarbeitungsergebnissen der Wert *AI*=*0* zugewiesen.

Wenn ein Rechnerknoten am Ende des Frames, zu dessen Beginn die Daten erfasst wurden, mit der Vorverarbeitung der erfassten Daten nicht fertig ist und noch keine neue *Zustandsnachricht* mit den Vorverarbeitungsergebnissen gebildet hat, so bleibt die zeitgesteuerte Zustandsnachricht des vorangegangenen Frames im Ausgabepuffer des Rechnerknoten unverändert. Das zeitgesteuerte Kommunikationssystem wird daher am Beginn des nächsten Frames die Zustandsnachricht des vorangegangenen Frames nochmals übertragen.

Wenn ein Rechnerknoten am Ende des Frames, zu dessen Beginn die Daten erfasst wurden, mit der Vorverarbeitung der erfassten Daten nicht fertig ist, so wird er zu Beginn des nächsten Frames keine neuen Daten erfassen.

Im Fall (b) der Fig. 2 ist das Verarbeitungsergebnis vom Prozess B auf Rechnerknoten **122** um einen Frame verzögert-*AI_{B}* erhält den Wert *AI_{B}*=*1.* Das Verarbeitungsergebnis von Prozess *C* auf Rechnerknoten **123** ist um zwei Frames verzögert-*AI_{C}* erhält den Wert *AI_{C}*=2*.* Das Verarbeitungsergebnis von Prozess *A* auf Rechnerknoten **121** ist nicht verzögert und erhält daher den Wert *AI_{A}*=*0.* Im Rahmen der Sensorfusion wird dem Verarbeitungsergebnis von Prozess *A* die höchste Gewichtung zugewiesen. Die Verarbeitungsergebnisse von Prozess *B* und Prozess *C* werden aufgrund des höheren *AI_{B}* und *AI_{C}* mit entsprechend weniger Gewicht in das Sensorfusionsergebnis eingehen.

Im Fall (c) der Fig. 2 sind die Verarbeitungsergebnisse von den Prozessen *A* und *B* nicht verzögert. Daher wird die Werte von *AI_{A}*=*0* und *AI_{B}*=*0* gesetzt. Das Verarbeitungsergebnis von Prozess *C* auf Rechnerknoten **122** ist um zwei Frames verzögert, daher hat *AI_{C}* den Wert *AI_{C}*=2*.* Wenn beispielsweise durch die Auswertung vergangener Frames bekannt ist, dass sich ein im beobachteten Umfeld bewegtes Objekt befindet, das mit dem Geschwindigkeitsvektor *v* seinen Ort ändern, so kann der Ort dieses Objektes in erster Näherung um den Wert *v.AI.d* korrigiert werden, wobei *d* die Dauer eines Frames angibt. Durch diese Korrektur wird die Position des Objektes an den Ort herangeführt, den das Objekt näherungsweise zum Zeitpunkt **210** eingenommen hat, und das Alter der Daten kompensiert. *Zeitgerechte* Verarbeitungsergebnisse, d.s. Verarbeitungsergebnisse mit dem Wert *AI=0,* sind von dieser Korrektur nicht betroffen.

Im Fall (d) der Fig. 2 wird die Sensorfusion verzögert, bis der langsamste Prozess, im konkreten Bild Prozess *C,* sein Vorverarbeitungsergebnis bereitgestellt hat. Damit ist die zeitliche Konsistenz der Eingabedaten gegeben, da alle Beobachtungen zum selben Zeitpunkt **208** vorgenommen wurden und zum selben Zeitpunkt **211** mit der Fusion begonnen wird. Da die Daten erst zum Zeitpunkt **211** fusioniert werden, liegen die Ergebnisse der Datenfusion erst zum Zeitpunkt **212** vor. Der verbesserten Konsistenz der Daten steht eine verzögerte Reaktion des Systems gegenüber.

Welche der vorgeschlagenen Strategien (b), (c) oder (d) zur Behandlung von verzögerten Vorverarbeitungsergebnissen ausgewählt wird, hängt von dem gegebenen Anwendungsszenario ab. Wenn z.B. die Framedauer *10 msec* beträgt und ein Fahrzeug mit einer Geschwindigkeit von *40 m*/*sec* (d.s. *144 km*/*h*) fährt, dann verlängert sich der Bremsweg bei Strategie (d) im Vergleich zu Strategie (b) um 40 cm. Beim Einparken mit einer Geschwindigkeit von *1*/*m*/*sec* (*3.6 km*/*h*), wo Genauigkeit besonders wichtig ist, ist die Verlängerung des Bremswegs von *1cm* ohne besondere Bedeutung.

Wenn einer der Rechnerknoten **121, 122,** und **123** am Ende des *l-ten* Frames (*l* ist ein a priori festgelegter Parameter, wobei *l*>*1*) nach der Datenerfassung noch kein Resultat bereitstellt, dann wird der Vorverarbeitungsprozess in diesem Rechner durch einen im Rechnerknoten aktiven Monitorprozess abgebrochen und entweder der Prozess neu gestartet oder ein *Reset* des Rechnerknotens, der den Vorverarbeitungsprozesses ausgeführt hat, durchgeführt. Unmittelbar nach dem dem *Reset* folgenden Wiederanlauf eines Rechnerknotens ist eine Diagnosenachricht an einen Diagnoserechner zu senden.

Wenn der oben zitierte *Monitorprozess* im Rechnerknoten **141** feststellt, dass ein a *priori festgelegter* Prozentsatz *P* der Verarbeitungsergebnisse einen Alterungsindex *AI≥1* aufweist, so kann der *Monitorprozess* im Rechnerknoten **141** eine *Framekontrollnachricht* an die Rechnerknoten **121, 122,** und **123** senden, um die Framedauer zu erhöhen, z.B. zu verdoppeln. Damit wird die zeitliche Datenkonsistenz verbessert, jedoch auf Kosten der Reaktionszeit.

Das vorgeschlagene erfindungsgemäße Verfahren löst das Problem der zeitlichen Inkonsistenz von Sensordaten, die von diversen Sensoren erfasst und den zugeordneten Rechnerknoten vorverarbeitet werden. Es ist daher von großer wirtschaftlicher Bedeutung.

Die vorliegende Erfindung legt ein Verfahren offen, wie in einem verteilten zyklisch arbeitenden Computersystem die Vorverarbeitungsergebnisse diverser bildgebender Sensorsysteme im Rahmen der Sensorfusion integriert werden können. Da die Dauer der Berechnung eines Vorverarbeitungsergebnisses von den erfassten Sensordaten abhängt, kann der Fall eintreten, dass die Vorverarbeitungsergebnisse der diversen Sensoren zu unterschiedlichen Zeitpunkten fertig gestellt werden, obwohl die Erfassung der Daten synchron erfolgt ist. Es wird ein innovatives Verfahren vorgestellt, wie die zeitliche Inkonsistenz der Vorverarbeitungsergebnisse der diversen Sensoren im Rahmen der Sensorfusion zu behandeln ist. Aus der Sicht der Anwendung ist zu entscheiden, ob eine *schnelle Reaktion* des Systems oder die *zeitliche Konsistenz der Daten* im gegebenen Anwendungsfall von größerer Bedeutung ist.

### Zitierte Literatur:

[1] US Patent 7,283,904. Benjamin, et al. Multi-Sensor Fusion. Granted Oct.16, 2007.
[2] US Patent 8,245,239. Garyali, et al. Deterministic Run-Time Execution Environment and Method. Granted Aug. 14, 2012
[3] US Patent 8,090,552. Henry, et al. Sensor Fusion using Self-Evaluating Process Sensors. Granted Jan. 3, 2012.
[4] Kopetz, H. Real-Time Systems, Design Principles for Distributed Embedded Applications. Springer Verlag. 2011.
[5] SAE Standard AS6802 von TT Ethernet. URL: http://standards.sae.org/as6802

## Patentansprüche

1. Verfahren zur Integration von Berechnungen mit variabler Laufzeit in eine verteilte zeitgesteuerte Echtzeitcomputerarchitektur, welche Echtzeitcomputerarchitektur aus einer Anzahl von Rechnerknoten (121, 122, 123) besteht, wobei den Rechnerknoten (121, 122, 123) eine globale Zeit mit bekannter Präzision zur Verfügung steht, wobei zumindest ein Teil der Rechnerknoten (121, 122, 123) mit Sensorsystemen (111, 112, 113), insbesondere unterschiedlichen Sensorsystemen zur Beobachtung der Umgebung ausgestattet ist, und wobei die Rechnerknoten (121,122,123) über ein Kommunikationssystem Nachrichten austauschen,
**dadurch gekennzeichnet, dass**
die Rechnerknoten (121, 122, 123) am Beginn jedes zyklischen Frames *Fᵢ* mit der Dauer *d rohe Eingabedaten* mit einem Sensorsystem (111, 112, 113) erfassen, wobei die Zeitpunkte des Anfangs (210) des Frames *Fᵢ* vom Fortschreiten der globalen Zeit abgeleitet werden, und wobei die Vorverarbeitung der rohen Eingabedaten mit Algorithmen durchgeführt wird, deren Laufzeiten von den Eingabedaten abhängen, und wobei bei einem Vorverarbeitungsergebnis, das innerhalb des Frames *Fᵢ* bereit gestellt wird, zu dessen Beginn die Eingabedaten erfasst wurden, der Wert des Alterungsindex *AI*=0 zugeordnet wird, und wobei einem Vorverarbeitungsergebnis, das innerhalb des der Erfassung folgenden Frames bereit gestellt wird, der Wert des Alterungsindex *AI*=*1* zugeordnet wird, und wobei einem Vorverarbeitungsergebnis, das im *n-ten* Frame nach der Datenerfassung bereitgestellt wird, der Wert *AI*=*n* zugeordnet wird, und wobei in den Rechnerknoten, die die Fusion der Vorverarbeitungsergebnisse der Sensorsysteme durchführen, die Alterungsindizes der Vorverarbeitungsergebnisse berücksichtigt werden.

2. Verfahren nach Anspruch 1, **dadurch gekennzeichnet, dass** bei der Fusion der Vorverarbeitungsergebnisse die Gewichtung eines Vorverarbeitungsergebnisses derart bestimmt wird, dass ein Vorverarbeitungsergebnis mit *AI*=*0* die höchste Gewichtung erhält und die Gewichtung von Vorverarbeitungsergebnissen mit *AI*>*0* umso geringer ist, je größer der Wert AI ist.

3. Verfahren nach Anspruch 1 oder 2, **dadurch gekennzeichnet, dass** bei der Fusion eines Vorverarbeitungsergebnisses mit AI>0 die Position eines in diesem Vorverarbeitungsergebnisses enthaltenen dynamischen Objekts, das sich mit einem Geschwindigkeitsvektor v bewegt, um den Wert *v*.*AI*.*d* korrigiert wird, wobei *d* die Dauer eines Frames angibt.

4. Verfahren nach Anspruch einem der Ansprüche 1 bis 3, **dadurch gekennzeichnet, dass** die Fusion der Vorverarbeitungsergebnisse erst nach dem Ende des Frames stattfindet, während dessen *alle* Vorverarbeitungsergebnisse der Daten, die zum gleichen Zeitpunkt erfasst wurden, vorliegen.

5. Verfahren nach einem der Ansprüche 1 bis 4, **dadurch gekennzeichnet, dass** ein Rechnerknoten, der am Ende des *l-ten* Frames nach der Datenerfassung die Vorverarbeitung noch nicht abgeschlossen hat, einen *Reset* des Rechnerknotens durchführt.

6. Verfahren nach einem der Ansprüche 1 bis 5, **dadurch gekennzeichnet, dass** ein Vorverarbeitungsprozess, der am Ende des *l-ten* Frames nach der Datenerfassung die Vorverarbeitung noch nicht abgeschlossen hat, neu gestartet wird.

7. Verfahren nach einem der Ansprüche 1 bis 6, **dadurch gekennzeichnet, dass** ein Rechnerknoten, der ein *Reset* durchgeführt hat, unmittelbar nach dem Wiederanlauf eine Diagnosenachricht an einen Diagnoserechner sendet.

8. Verfahren nach einem der Ansprüche 1 bis 7, **dadurch gekennzeichnet, dass** ein *Monitorprozess* im Rechnerknoten (**141**) eine *Franrekontrollnachricht* zur Erhöhung der Framedauer an Rechnerknoten (**121, 122, 123**) sendet, falls ein *a priori* festgelegter Prozentsatz P der Verarbeitungsergebnisse einen Alterungsindex *AI≥1* aufweist.

9. Verfahren nach einem der Ansprüche 1 bis 8, **dadurch gekennzeichnet, dass** zur Übertragung der Nachrichten zwischen den Knotenrechnern (121, 122, 123) das TTEthernet Protokoll eingesetzt wird.

## Claims

1. A method for integration of calculations having a variable runtime into a distributed time-controlled real-time computer architecture, which real-time computer architecture consists of a number of computing nodes (121, 122, 123), wherein a global time of known precision is made available to the computing nodes (121, 122, 123), wherein at least some of the computing nodes (121, 122, 123) are equipped with sensor systems (111, 112, 113), in particular different sensor systems for monitoring the surrounding environment, and wherein the computing nodes (121, 122, 123) exchange messages via a communication system,
**characterised in that**
the computing nodes (121, 122, 123) detect raw input data by means of a sensor system (111, 112, 113) at the start of each cyclic frame *Fᵢ* of duration *d,* wherein the times of the start (210) of the frame *Fᵢ* are derived from the progress of the global time, and wherein the pre-processing of the raw data is performed with algorithms, the runtimes of which are dependent on the input data, and wherein the value of the ageing index *AI*=0 is assigned to a pre-processing result that is provided within the frame *Fᵢ* at the start of which the input data were detected, and wherein the value of the ageing index *AI*=*1* is assigned to a pre-processing result that is provided within the frame following the frame in which the input data were detected, and wherein the value *AI=n* is assigned to a pre-processing result that is provided in the *n^{th}* frame after the data detection, and wherein the ageing indices of the pre-processing results are taken into consideration in the computing nodes that carry out the fusion of the pre-processing results of the sensor systems.

2. The method according to claim 1, **characterised in that** the weighting of a pre-processing result during the fusion of the pre-processing results is determined in such a way that a pre-processing result with *AI*=0 obtains the highest weighting and the weighting of pre-processing results with *AI*>0 is all the lower, the greater is the value *AI*.

3. The method according to claim 1 or 2, **characterised in that**, during the fusion of a pre-processing result with *AI*>0, the position of a dynamic object contained in said pre-processing result and moving with a speed vector *v* is corrected by the value *v.AI.d,* wherein d is the duration of a frame.

4. The method according to any one of claims 1 to 3, **characterised in that** the fusion of the pre-processing results takes place only after the end of the frame during which *all* pre-processing results of the data that were detected at the same time are present.

5. The method according to any one of claims 1 to 4, **characterised in that** a computing node that has not yet completed the pre-processing at the end of the *I^{th}* frame after the data detection performs a *reset* of the computing node.

6. The method according to any one of claims 1 to 5, **characterised in that** a pre-processing process that has not yet completed the pre-processing at the end of the *I^{th}* frame after the data detection is restarted.

7. The method according to any one of claims 1 to 6, **characterised in that** a computing node that has performed a *reset* sends a diagnosis message to a diagnosis computer immediately after the restart.

8. The method according to any one of claims 1 to 7, **characterised in that** a *monitor process* in the computing node (141) sends a *frame control message* to increase the frame duration to computing nodes (121, 122, 123) if a percentage *P* of the processing results determined *a priori* has an ageing index *AI≥1.*

9. The method according to any one of claims 1 to 8, **characterised in that** the TTEthernet protocol is used to transfer the messages between the computing nodes (121, 122, 123).

## Revendications

1. Procédé d'intégration de calculs ayant un temps d'exécution variable dans une architecture informatique en temps réel, commandée par le temps, distribuée, laquelle architecture informatique en temps réel consiste en une pluralité de noeuds informatiques (121, 122, 123), dans lequel un temps global ayant une précision connue est disponible pour les noeuds informatiques (121, 122, 123), dans lequel au moins une partie des noeuds informatiques (121, 122, 123) est équipée de systèmes de capteur (111, 112, 113), en particulier différents systèmes de capteur pour observer l'environnement, et dans lequel les noeuds informatiques (121, 122, 123) échangent des messages par un système de communication,
**caractérisé par le fait que**
les noeuds informatiques (121, 122, 123) collectent des *données d'entrée brutes* au moyen d'un système de capteur (111, 112, 113) au début de chaque trame cyclique *Fᵢ* ayant la durée *d,* dans lequel les temps de début (210) de la trame *Fᵢ* sont déduits de la progression du temps global, et dans lequel le prétraitement des données d'entrée brutes est effectué au moyen d'algorithmes, dont les temps d'exécution dépendent des données d'entrée, et dans lequel la valeur de l'indice de péremption *AI*=0 est affectée à un résultat de prétraitement qui est produit dans la trame *Fᵢ*, au début de laquelle les données d'entrée ont été collectées, et dans lequel la valeur de l'indice de péremption *AI*=*1* est affectée à un résultat de prétraitement, qui est produit dans la trame suivant la collecte, et dans lequel la valeur *AI*=n est affectée à un résultat de prétraitement qui est produit dans la n-ième trame après la collecte de données, et dans lequel les indices de péremption des résultats de prétraitement sont pris en compte dans les noeuds informatiques qui exécutent la fusion des résultats de prétraitement des systèmes de capteur.

2. Procédé selon la revendication 1, **caractérisé par le fait que,** dans la fusion des résultats de prétraitement, la pondération d'un résultat de prétraitement est déterminée de telle sorte qu'un résultat de prétraitement ayant *AI*=0 reçoit la pondération la plus élevée et la pondération de résultats de prétraitement ayant *AI*>0 est d'autant plus faible que la valeur de *AI* est grande.

3. Procédé selon l'une des revendications 1 ou 2, **caractérisé par le fait que,** dans la fusion d'un résultat de prétraitement ayant AI>0, la position d'un objet dynamique contenu dans ce résultat de prétraitement, lequel objet se déplace avec un vecteur de vitesse *v,* est corrigée par la valeur *v.AI.d,* où d indique la durée d'une trame.

4. Procédé selon l'une des revendications 1 à 3, **caractérisé par le fait que** la fusion des résultats de prétraitement n'a lieu qu'après la fin de la trame, pendant laquelle *tous* les résultats de prétraitement des données, qui ont été collectées en même temps, sont disponibles.

5. Procédé selon l'une des revendications 1 à 4, **caractérisé par le fait que,** un noeud informatique, qui n'a pas encore terminé le prétraitement à la fin de la *l-ième* trame après la collecte de données, effectue une *réinitialisation* du noeud informatique.

6. Procédé selon l'une des revendications 1 à 5, **caractérisé par le fait qu'**un procédé de prétraitement, qui n'a pas encore terminé le prétraitement à la fin de la *l-ième* trame après l'acquisition de données, est redémarré.

7. Procédé selon l'une des revendications 1 à 6, **caractérisé par le fait qu'** un noeud informatique, qui a effectué une *réinitialisation,* envoie un message de diagnostic à un ordinateur de diagnostic immédiatement après le redémarrage.

8. Procédé selon l'une des revendications 1 à 7, **caractérisé par le fait que,** *un processus de surveillance* dans un noeud informatique (141) envoie un *message de commande de trame* pour augmenter la durée de trame aux noeuds informatiques (121, 122, 123), si un pourcentage P déterminé a *priori* des résultats de prétraitement présente un indice de péremption *AI>1.*

9. Procédé selon l'une des revendications 1 à 8, **caractérisé par le fait que** le protocole TTEthernet est utilisé pour transmettre les messages entre les noeuds informatiques (121, 122, 123)
